# EUROPEAN PATENT APPLICATION

(11) **EP 2 053 864 A1**
(43) Date of publication of application: **29.04.2009**
(21) Application number: 07020137.1
(22) Date of filing: 15.10.2007
(51) Int. Cl.: H04N 7/52, H04N 7/173, H04N 7/24

(54) **System for distributing TV signals to an end-terminal**

(71) Applicant: Koninklijke KPN N.V., 2516 CK The Hague (NL)
(72) Inventor: Koster, Azian, 3641 GS Mijdrecht (NL); Casal Gómez, Alejandro Vicente, 2492 VX The Hague (NL); van de Leur, Jerry, 2804 LS Gouda (NL)
(74) Representative: Wuyts, Koenraad Maria

(57) **Abstract**

A system is described for distributing TV signals to an end-terminal. The system comprises at least one central broadcast station, a channel manager and one or more end-terminals connected to the channel manager. The broadcast station is adapted to transmit at least one TV channel signal, comprising an audio signal and a video signal and one or more service signals to the channel manager. Further, the channel manager is adapted to receive the TV channel signal, to extract the audio, video and service signals from the TV channel signal, to transform the signals into packetized elementary streams and to transmit a packetized data transport stream to the channel manager. The transport stream comprises a TV channel stream, comprising elementary audio and video streams, and a services channel stream, comprising one or more elementary service streams and the one or more end-terminals are adapted to select between the TV channel stream and the services channel stream.

## Description

### Field of the invention

The invention relates to a system for distributing TV signals to an end-terminal. More in particular, the invention relates to a system for distributing a packetized transport stream comprising a TV channel stream and a services channel stream to one or more end-terminals.

### Background of the invention

The introduction of the Internet Protocol Television (IPTV) allows television services to be distributed via an IP network to home-located end-terminals thereby enabling an operator to deliver advanced (interactive) services based on TV broadcasting, video-on-demand (VoD), e-mail and web-browsers to users of a television system.

A conventional system for distributing TV signals over an IP network comprises a central broadcast station, e.g. a satellite, cable- or terrestrial station, which transmits an analog TV signal or a digital video broadcast signal to the headend of an operator. At the headend the signal is converted in to a packetized transport stream which is then introduced as a multicast stream into the core network of the operator. The transport stream is further distributed by IPTV middleware (managing user authentication, billing, VoD requests, advertising, etc.) via access nodes to end-terminals.

In such system the operator's network is a high bandwidth network allowing to stream channels to Lhe access nodes. The "local" access line between the access nodes and the end-terminal however is an access line with limited bandwidth. Moreover, in case of a Digital Subscriber line (DSL) the bandwidth quickly drops as distance between the access node and the end-terminal grows. The number of simultaneous TV channels which can be sent from the access node to an end-terminal is therefore limited. For that reason the access node is configured as a channel switching system. Whenever a user changes the channel on the end-terminal, it requests the access node to leave the current multicast group and to join a new multicast group corresponding to the selected channel. Thereafter the access node will transmit the requested channel stream to the end-terminal.

Beside the audio and video signals of the TV channels, the signal transmitted by the central broadcast station also comprises additional service signals. For example, data signals originally transmitted in the vertical blanking interval between video frames in an analog TV channel signal. These signals are able to carry additional services such as teletext information and subtitles.

One problem related to conventional TV distribution systems is that the additional service signals are introduced into the packetized transport stream as an elementary stream of the TV channel stream.

An TV channel stream in known systems comprises the elementary audio and video streams forming the TV channel and one or more elementary service streams. The access node will transmit the audio and the video streams together with the service streams - including the teletext stream - as one channel stream to the end-terminal. Teletext information and the TV channel program however are offered as separate services and usually not watched together. Consequently, when a viewer watches a TV channel program, a conventional TV distribution system transmits certain elementary service streams, such as the elementary teletext streams, to the end-terminal, which are superfluous and unnecessarily occupy valuable bandwidth of the access line.

### Summary of the invention

It is an object of the invention to reduce or eliminate at least one of the drawbacks of a conventional TV signal distribution system and to provide a system for distributing TV signals to an end-terminal, such as a set-top box. The system comprises at least one central broadcast station, a channel manager and one or more end-terminals connected to the channel manager. The broadcast station is adapted to transmit at least one TV channel signal to the channel manager, wherein the TV channel signal comprises an audio and a video signal and one or more service signals.

The channel manager is adapted to receive the TV channel signal, to extract the audio, video and service signals from the TV channel signal, to transform the signals into packetized elementary streams and to transmit a packetized data transport stream. The transport stream comprises (i) a TV channel stream, comprising an elementary audio stream and an elementary video stream, and (ii) a services channel stream, comprising the one or more elementary service streams. Further, the end-terminal is adapted to receive one or more channels streams in the transport stream and to select between the TV channel stream and the services channel stream.

The channel manager is adapted to receive and analyze the content of a TV signal, i.e. the TV channel signals carried by the TV signal, wherein each TV channel signal comprises audio, video and service signals. Further, the channel manager is adapted to transform each TV channel signal into a first packetized channel stream (a TV channel stream), comprising elementary audio and video streams, and a second packetized channel stream (a service channel stream), comprising one or more elementary service channel streams.

Preferably the TV channel stream does not contain service streams, such as an elementary teletext information stream, which occupy a relatively large amount of bandwidth of the access line to the end-terminal and which are not necessarily watched together with the elementary audio and video steams of the TV channel program.

The system according to the invention thus transforms the originally broadcasted TV channel, which beside the audio and video signals includes additional service signals, into two separate channel streams and transmits these two channel streams in the transport stream to the end-terminal. Thus, upon selection of the TV channel, only the necessary audio and video streams forming the TV channel program are transmitted to the end-terminal, thereby saving valuable bandwidth when compared to known systems. As a consequence, the system will allow more TV channels to be simultaneously transmitted over the access line to the end-terminal.

In one embodiment the TV channel signal is an analog signal in which the one or more services signals are transmitted in the vertical blanking interval between video frames in the TV channel signal. In a further embodiment TV channel signal is a digital broadcast signal comprising a TV channel stream, the TV channel stream comprising a audio stream, a video stream and one or more services service streams.

In a further embodiment a first service signal is a teletext information signal and a second service signal is a subtitle signal.

By identifying the various service signals transmitted in the vertical blanking interval between video frames in the TV channel signal or transmitted in a digital broadcast signal, the system is able to extract service signals, such as a teletext or a subtitle signal, and to offer this signal in a service channel associated to the TV channel to the end-terminal. By selecting either the TV channel or the service channel only one of the channels is transmitted by the access node to the end-terminal, thus substantially reducing the load of the access connection.

In a further embodiment of the invention, the channel manager is adapted to extract the teletext signal from the service signal, to transform the teletext signal into an elementary teletext stream to form a service channel in the transport stream and to incorporate the elementary teletext stream into the services channel stream.

Further, in one embodiment the channel manager is adapted to extract the subtitle signal from a service signal, to transform the subtitle signal into an elementary subtitle stream and to incorporate the elementary subtitle stream into the TV channel stream.

The subtitle stream occupies relatively little bandwidth and is - contrary to the teletext stream - used in combination with the audio and video stream of the TV channel. It is therefore favorable to have the elementary subtitle stream into the channel stream.

In order to allow the end-terminal to select a TV channel or its associated service channel, the system comprises in a further embodiment of the invention a channel information manager adopted to generate channel identification information, for the end-terminal, comprising information for identifying and accessing the channel streams in the transport stream.

In one embodiment the channel information manager is adapted to introduce the channel identification information in the transport stream. In another embodiment of the invention, the channel information manager is adapted to transmit the channel identification information in an out-of-band signal to the end-terminal.

In a further embodiment the end-terminal is connected via an access node to the channel manager. The access node can be a DSLAM or an optical access node. In an embodiment the access node is adapted to extract one or more channel streams from the transport stream and to transmit the extracted channel streams to the one or more end-terminals. The access node is thus capable of extracting one or more channel streams from the total of channels present in the transport stream.

In another embodiment the end-terminal is adapted to send selected channel identification information on one or more channels selected by the end-terminal to the access node.

An end-terminal is capable of sending a request for a change in a channel to the access node, wherein the access node is capable of extracting the selected channel from the transport stream and to transmit the selected channel stream to the end-terminal.

In an embodiment of the invention the TV signal transmitted by the central broadcast station may be a packetized data transport stream forming a second transport stream, comprising at least one TV channel stream wherein the TV channel stream comprises elementary audio and video streams, and one or more elementary service streams.

In another embodiment the central broadcast station may be connected via a first network to the channel manager and the channel manager may be connected via a second network to the end-terminal.

The invention further relates to a packetized data transport stream, which is transmitted to one or more access nodes in a network by a channel manager, wherein the channel manager is capable of receiving at least one TV channel signal transmitted by a central broadcast station. The TV channel signal comprises an audio signal and a video signal and one or more service signals. The transport stream comprises (i) a TV channel stream, comprising elementary audio and video streams and (ii) a services channel stream, wherein the service channel stream comprises one or more elementary service streams corresponding to the one or more service signals in the TV channel signal.

In one embodiment the TV channel stream further comprises an elementary subtitle stream carrying information corresponding to the subtitle information present one of the service signals.

In a further embodiment the services channel stream comprises an elementary teletext stream carrying information corresponding to the teletext information present in one of the service signals.

The invention further relates to a channel manager for use in a system for distributing TV signals to an end-terminal as described above. In one embodiment the channel manager comprises:
- means for receiving a TV channel signal transmitted by a central broadcast station, the TV channel comprising an audio signal and a video signal and one or more service signals,
- means to extract the audio, video and service signals from the TV channel signal,
- means to transform the audio, video and service signals into packetized elementary streams and to transmit a packetized data transport stream to the end-terminal, wherein the transport stream comprises (i) a TV channel stream, the TV channel stream comprising elementary audio and video streams, and (ii) a services channel stream, the service channel stream comprising one or more elementary service streams.

The invention also relates to an end-terminal, such as a set-top box, for use in a system for distributing TV signals to an end-terminal as described above. In one embodiment the end-terminal is capable of receiving via an access node one or more channel streams in the transport stream, wherein the end-terminal comprises:
- means for receiving channel identification information comprising information for identifying a TV channel stream and a service channel stream in the transport stream and information accessing the channels,
- means for selecting between a TV channel stream and a service channel present in the transport stream,
- means for transmitting selected channel identification information to the access node, means to receive one or more selected channel streams.

The invention will be further illustrated with reference to the attached drawing, which schematically show embodiments according to the invention. It will be understood that the invention is not in any way restricted to these specific embodiments.

### Brief description of the drawings

Fig. 1 depicts an exemplary embodiment of system according to the invention.
Fig. 2 depicts an exemplary embodiment of a transport stream according to the invention.
Fig. 3 illustrates the information flow between channel information manager, the end-terminal and the access node.

### Detailed description

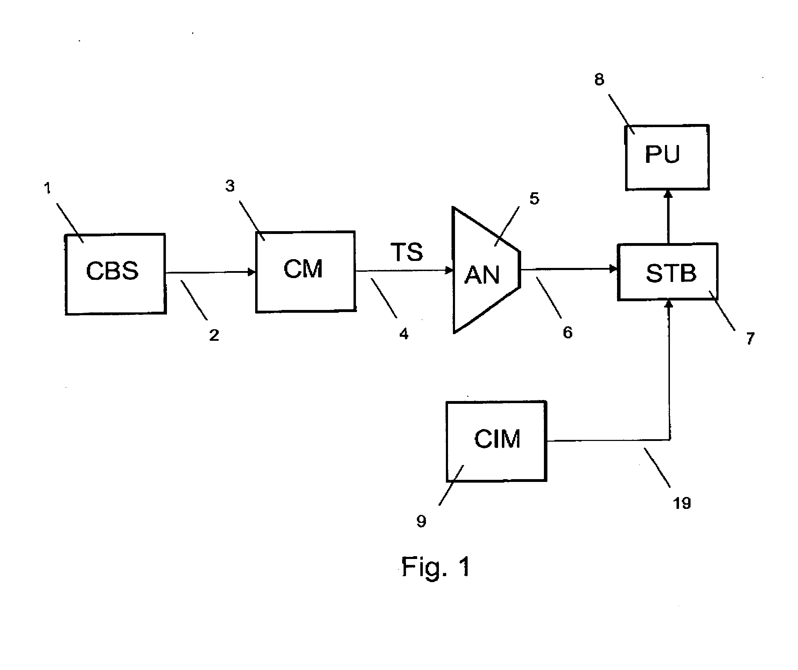

Fig. 1 depicts a schematic of a system for distributing a TV signal to one or more end-terminals according to the present invention. The system comprises a central broadcast station (CBS) 1, which is capable of transmitting a TV signal 2 to a channel manager (CM) 3 and which is capable of analyzing and managing the content of the TV signal. Further, the channel manager 3 is capable of forming a packetized transport stream (TS) 4, wherein the content of the transport stream is arranged in a predetermined format. An access node (AN) 5 is connected to the channel manager 3 and is capable of transmitting one or more channel streams in the transport stream via an access line 6 to an end-terminal (STB) 7. The end-terminal 7 is connected to a presentation unit (PU) 8. The system further comprises a channel information manager (CIM) 9, which is capable of providing the set-top box with channel identification information.

The TV signal 2 may be a conventional analog TV signal, e.g. a signal based on PAL, SECAM, NTSC, etc., wherein each TV channel is transmitted at a specific carrier frequency. Alternatively, the TV signal may be a digital broadcasting signal, e.g. a signal based on DVB, ASI, SDI and other well known digital standards.

Further, the digital broadcasting signal may be transmitted using standard techniques such as MPEG-2, MPEG-4, the Real-time Transport Protocol (RTP), Advanced Systems Format (ASF), etc., to manage the transport of a digital signal from a transmitter to a receiver and to maintain synchronization between the transmitter and receiver.

Beside the audio and video signals (or streams) forming the broadcasted television program, the TV channel signal 2 also comprises additional service signals. In an analog TV signal for instance these service signals are transmitted in the vertical blanking interval between video frames of a particular TV channel signal. Such services comprise teletext services (including TV schedules, regularly updated current affairs and sport news, simple games, etc.) and subtitling services in different languages. Digital type TV signals also support such additional service signals. The service signals are one or more elementary service streams transmitted together with the elementary audio and video streams of a particular TV channel.

The TV signal 2, comprising one or more TV channels, is received by a channel manager 3, which is a combined hardware/software system capable of receiving the TV signal and extracting for each TV channel in the TV signal the audio and video signals and the one or more service signals associated to that TV channel. The channel manager 3 is also adapted to transform these signals into packetized elementary audio and video streams, elementary teletext information streams, elementary subtitle streams and elementary streams of further additional services present in the TV channel signal. Each elementary stream thus carries one particular type of information.

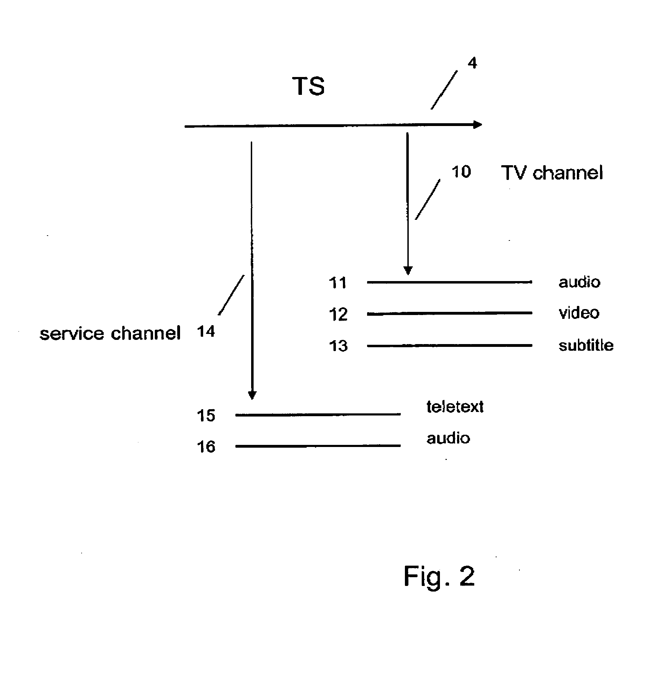

Using the elementary streams the channel manager 3 is capable of forming a transport stream 4. This transport stream is schematically depicted in Fig. 2. It comprises a TV channel stream 10, which comprises the elementary audio stream 11 and video stream 12 of a TV channel. The TV channel stream may comprise further streams, such as an elementary subtitle stream 13. Further, the transport stream comprises a service channel stream 14, associated with the TV channel stream 10, which comprises one or more elementary service streams, such as an elementary teletext information steam 15 and an elementary audio stream 16 corresponding to the elementary audio stream of the TV channel stream.

The channel manager 3 thus splits the originally transmitted TV channel signal 2 into a first channel stream (a TV channel stream 10), and a second channel stream (a service channel stream 14) associated to the first channel stream.

A service channel stream 14 preferably comprises at least an elementary teletext information stream 15, but may also contain additional elementary streams, such as the elementary audio stream 16 of the TV channel associated with the service channel. Similarly, a TV channel preferably comprises at least the elementary audio and video stream 11,12 containing at least the minimal audio/video information, enabling the end-terminal to transform the packetized TV channel stream into a signal suitable for the input of the information presentation unit 8. Such information presentation unit 8 may be a television, a personal computer, a personal digital assistant (PDA) or any other device capable of presenting the audio/video signal to a user.

Subsequently, the channel manager transmits the transport stream 4 via one or more networks to the access nodes 5 to which the end-terminals 7, such as set-top boxes, are connected to.

The access nodes 5 are network devices, located near the customer's location, that connects multiple access lines to a high-speed IP network. Such network devices include Digital Subscriber Line Access Multiplexers (DSLAM) and optical access nodes and are capable of extracting one or more TV or service channel streams from the transport stream and transmitting the one or more extracted channel streams over the access line to the end-terminal. Typically, the transport stream 4 may be a multicast stream. Further, the channel streams 10,14 may be offered to the access nodes as IP multicast channel streams, allowing all end-terminals that subscribe to a particular TV or service channel to receive the same signal.

The transport stream 4 thus offers - contrary to known TV signal distribution systems - TV channel streams 10 and associated service channel streams 14 as separate channel streams to the access nodes 5. Consequently, the system is capable of offering similar services as a conventional TV signal distribution system, while saving valuable bandwidth in the access line to the end-terminals. The bandwidth occupancy of the access line is improved by eliminating certain predetermined elementary streams, which are not necessarily used simultaneously with the TV channel streams (such as the elementary teletext information streams) from the TV channel stream and introducing these streams into a separate service channel. Each TV channel stream 10 thus occupies less bandwidth in the access line.

In order to allow the end-terminal to select between a TV channel and a service channel, the system according to the invention comprises a channel information manager 9. The channel information manager 9 may be located at a data center, which may be a local data center of the operator hosting the IPTV middleware. Alternatively the channel information manager 9 may have a distributed architecture having various distributed functional entities located at various locations in the network.

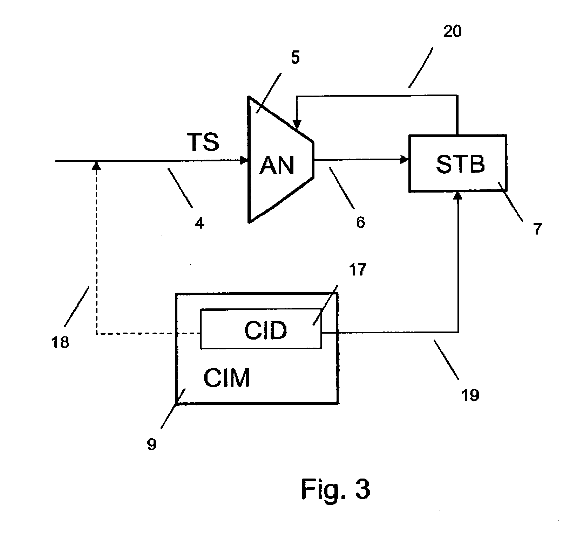

The channel information manager 9 is able to distribute channel identification information (CID) 17 to the end-terminal 7. This is schematically depicted in Fig. 3. The information may be inserted 18 into the transport stream 4. Alternatively, the information is send via an out-of-band signal 19 to the end-terminal 7. The channel identification information 17 comprises a list of TV channels and associated service channels from which the user of a end-terminal can select form and information for accessing the channel streams.

In the case the channels 10,14 in the transport stream are offered to the access nodes as multicast groups, each channel in the lists of the channel identification information 17 comprises an associated IP multicast address corresponding to a particular multicast group.

The end-terminal 3 is further adapted to allow a user to select a channel (either a TV channel or an associated service channel). Upon selection of a channel, the end-terminal will send a request 20 to the access node for joining a particular multicast group. In such request selected channel identification information, which includes information for accessing the selected channel, is also send to the access node. Such request may be a request using the Internet Membership Protocol (IGMP) or a similar protocol for joining a multicast group.

The invention is not limited to the embodiments described above, which may be varied within the scope of the accompanying claims.

## Claims

1. System for distributing TV signals to an end-terminal, the system comprising at least one central broadcast station, a channel manager and at least one end-terminal connected to the channel manager,
- wherein the broadcast station 1 is adapted to transmit at least one TV channel signal, comprising an audio signal and a video signal and one or more service signals to the channel manager,
- wherein the channel manager 3 is adapted to receive the TV channel signal, to extract the audio, video and service signals from the TV channel signal, to transform the signals into packetized elementary streams 11,12,13,15,16 and to transmit a packetized data transport stream 4,
- wherein the transport stream 4 comprises (i) a TV channel stream 10, comprising an elementary audio stream 11 and an elementary video stream 12, and (ii) a services channel stream 14, comprising one or more elementary service streams 15,16,
- wherein the end-terminal 7 is adapted to receive one or more channels streams 10,14 in the transport stream 4 and to select between the TV channel stream and the services channel stream.

2. System according to claim 1, wherein the TV channel signal is either an analog TV signal in which the one or more services signals are transmitted in the vertical blanking interval between video frames in the TV channel signal or a digital broadcast TV signal comprising a TV channel stream, the TV channel stream comprising an elementary audio stream, an elementary video stream and one or more elementary services streams.

3. System according to claims 1 and 2, wherein a first service signal is a teletext information signal and a second service signal is a subtitle signal.

4. System according to claim 3, wherein the channel manager is adapted to extract the teletext information signal from the service signal, to transform the teletext information signal into an elementary teletext information stream and to incorporate the elementary teletext information stream into the services channel stream.

5. System according to any of claims 3 or 4, wherein the channel manager is adapted to extract the subtitle signal from the service signal, to transform the subtitle signal into an elementary subtitle stream and to incorporate the elementary subtitle stream into the TV channel stream.

6. System according to any of claims 1 to 5, wherein the system further comprises a channel information manager adopted to generate channel identification information for the end-terminals, the channel identification information comprising information for identifying and accessing the channel streams in the transport stream.

7. System according to claim 6, wherein the channel information manager is adapted to introduce the channel identification information in the transport stream.

8. System according to any of claims 6, wherein the channel information manager is adapted to transmit the channel identification information in an out-of-band signal to the end-terminal.

9. System according to any of claims 1 to 8 wherein the end-terminal is connected via an access node to the channel manager.

10. System according to claim 9, wherein the access node is adapted to extract one or more channels streams from the transport stream and to transmit the extracted channel streams to the end-terminal.

11. System according to claim 10, wherein the end-terminal is adapted to send selected channel identification information on one or more channels selected by the end-terminal to the access node.

12. System according to any of claims 1 to 11, wherein the central broadcast station is connected via a first network to the channel manager and wherein the channel manager is connected via a second network to the end-terminal.

13. Packetized data transport stream transmitted to one or more access nodes in a network by a channel manager, wherein the channel manager is capable of receiving at least one TV channel signal transmitted by a central broadcast station, the TV channel signal comprising an audio signal and a video signal and one or more service signals, the transport stream comprising (i) a TV channel stream, comprising elementary audio and video streams and (ii) a services channel stream, comprising one or more elementary service streams corresponding to the one or more service signals in the TV channel signal.

14. Transport stream according to claim 13, wherein the TV channel stream further comprises an elementary subtitle stream carrying information corresponding to the subtitle information present one of the service signals.

15. Transport stream according to claims 13 or 14, wherein the services channel stream comprises an elementary teletext stream carrying information corresponding to the teletext in-formation present in one of the service signals.

16. Channel manager for use in a system according to any of claims 1-12, comprising:
- means for receiving a TV channel signal transmitted by a central broadcast station, the TV channel comprising an audio signal and a video signal and one or more service signals,
- means to extract the audio, video and service signals from the TV channel signal,
- means to transform the audio, video and service signals into packetized elementary streams and to transmit a packetized data transport stream to at least one end-terminal, wherein the transport stream comprises (i) a TV channel stream, comprising elementary audio and video streams, and (ii) a services channel stream, comprising one or more elementary service streams.

17. End-terminal for use in a system according to any of claims 1-12, the end-terminal capable of receiving via an access node one or more channel streams in the transport stream, the end-terminal comprising:
- means for receiving channel identification information comprising information for identifying a TV channel stream and a service channel stream in the transport stream and information for accessing the channels,
- means for selecting between a TV channel stream and a service channel present in the transport stream,
- means for transmitting selected channel identification information to the access node,
- means to receive one or more selected channel streams.
